# EUROPEAN PATENT APPLICATION

(11) **EP 4 648 026 A1**
(43) Date of publication of application: **12.11.2025**
(21) Application number: 25745252.4
(22) Date of filing: 24.01.2025
(51) Int. Cl.: G06V 30/412, G06V 10/776, G06N 3/0455, G06N 3/08, G06F 16/901, G06F 16/907

(54) **CHART DE-RENDERING SYSTEM, METHOD AND PROGRAM FOR EXTRACTING META INFORMATION AND DATA INFORMATION FROM CHART BY USING ARTIFICIAL INTELLIGENCE**

(30) Priority: 25.01.2024 KR 20240011842
(71) Applicant: LG Management Development Institute Co., Ltd., Seoul 07336 (KR)
(72) Inventor: RYOO, Kwangrok, Seoul 07788 (KR); LEE, Seungjun, Gimpo-si, Gyeonggi-do 10099 (KR); LEE, Soonyoung, Seoul 06299 (KR)
(74) Representative: BCKIP Part mbB
(86) International application number: PCT/KR2025/001512
(87) International publication number: WO 2025/159586

(57) **Abstract**

A chart de-rendering system, method, and program for extracting meta information and data information from a chart using artificial intelligence are disclosed. The system includes a memory in which an image encoder and an AI model are included, and a processor configured to execute or train the AI model, wherein the image encoder receives a chart, converts the chart into a first embedding processable by the AI model, and outputs the first embedding, and the AI model includes a meta decoder that outputs a second embedding including meta information from the first embedding, and a data decoder that outputs a fourth embedding including data information from a third embedding including information about an entity included in the second embedding. The data information included in the fourth embedding may be tokenized into a single token for each piece of data information, and a predefined repetitive template may be used in extracting the data information from the single tokens.

## Description

### [Technical Field]

The present invention relates to a chart de-rendering system, method, and program for extracting meta information and data information included in a chart, and more particularly, to a chart de-rendering system, method, and program capable of extracting meta information and data information included in a chart using artificial intelligence.

### [Background Art]

Charts included in papers, reports, textbooks, and the like are generally generated through a process of transmitting data tables set by numbers and groups, and code defining an overall layout (e.g., type, orientation, color/shape configuration, etc.) to a rendering engine.

Chart de-rendering refers to a process opposite to chart rendering, in which visual patterns or information of a chart are analyzed and grouped to extract key information, and information about data (e.g., numbers, groups, etc.) and information about chart layout is extracted from the key information.

A rule-based model was used in an initial chart de-rendering process. The rule-based model refers to a model that extracts information of the chart using predefined functions (e.g., color detection, chart axis value extraction, etc.) and combines or analyzes each piece of information using predefined rules. The rule-based model has an advantage of excellent accuracy, but has a disadvantage of lacking scalability due to the requirement of separate models for each type of chart.

In order to compensate for the disadvantage, a generative model method using a single trained artificial intelligence (AI) has been introduced (DePlot: One-shot visual language reasoning by plot-to-table translation. In Findings of the Association for Computational Linguistics: ACL 2023, pages 10381-10399). The generative model can be easily applied to all types of charts with a single model, unlike the rule-based model, thereby providing improved scalability.

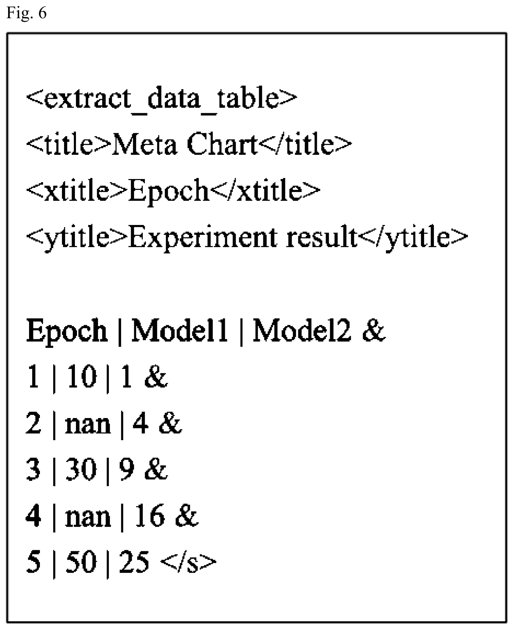

However, a conventional generative model used a method of including meta information (e.g., names of X-axis and Y-axis, names of entity (a single unit of data) groups recorded in a legend, etc.) and data information (e.g., numerical values of the X-axis and/or Y-axis of each entity, etc.) in a single data format without distinguishing between them. For example, as shown in FIG. 6, a title of a chart (Meta Chart), a name of an X-axis (Epoch), a name of a Y-axis (Experiment result), X-axis (Epoch) values of [1, 2, 3, 4, 5], and all Y values (i.e., [10, nan, 30, nan, 50] for Model 1 and [1, 4, 9, 16, 25] for Model 2) of each entity group (Model 1 and Model 2), which correspond to the X-axis (Epoch) values, are recorded in a single data format. Such a data format includes a large amount of represented information, which makes data representation complex, has a constraint of having to represent all Y values dependent on each X value, and has problems such as a high possibility of format errors because an entity value (e.g., "nan" value) is not identified.

In addition, the conventional generative model generally treated numbers as text. As a result, numbers are represented using a method of dividing a single number into irregular units, splitting each unit into multiple tokens, and inputting the tokens. Such a method uses an unnecessarily large number of tokens to represent a single number (e.g., when representing the number 13.1, since "1" and "3.1" are represented by being input as separate tokens, a total of two tokens are needed). Accordingly, a conventional language model used an unnecessarily large number of tokens, resulting in token waste or a decrease in inference speed.

Prior Art Documents Non-Patent Literature DePlot: One-shot visual language reasoning by plot-to-table translation. In Findings of the Association for Computational Linguistics: ACL 2023, pages 10381-10399

### [Disclosure]

### [Technical Problem]

An objects of the present invention is directed to providing a system, method, and program capable of efficiently and accurately extracting numerical information while providing a data format that simply represents the content of data included in a chart.

Objects of the present invention are not limited to the above-described object, and other objects that are not mentioned will be clearly understood by those skilled in the art from the following description.

### [Technical Solution]

A system for implementing an AI model for extracting meta information and data information included in a chart according to the present invention includes at least one processor, and at least one memory storing a command or information that cause the at least one processor to perform an operation, wherein the operation performed by the command includes converting the chart into a first embedding processable by the AI model, by inputting the chart to an image encoder, outputting a second embedding including the meta information from the first embedding by inputting the first embedding to the AI model, and outputting a fourth embedding including the data information from a third embedding including information about an entity included in the second embedding, and outputting each of a first data format in which the meta information included in the second embedding is recorded and a second data format in which the data information included in the fourth embedding is recorded.

In the system, the data information included in the fourth embedding may be distinguished for each entity group.

In the system, the meta information may include a title of the chart, a name of an axis, and a name of the entity group included in a legend.

In the system, the data information may include numerical information included in the chart.

In the system, the data information may be tokenized into a single token for each piece of the data information and included in the fourth embedding, and in recording the data information included in the fourth embedding in the second data format, the tokenized data information may be extracted from the single tokens and recorded in the second data format.

In the system, the data information may be extracted from the single tokens using a multi-layer perceptron (MLP).

In the system, in extracting the data information from the single tokens, a plurality of pieces of data information may be simultaneously extracted by inputting the single tokens with a predefined repetitive template.

A method for extracting meta information and data information included in a chart according to another aspect of the present invention may include converting the chart into a first embedding processable by an AI model by inputting the chart to an image encoder, outputting a second embedding including the meta information from the first embedding by inputting the first embedding to the AI model, outputting a fourth embedding including the data information from a third embedding including information about an entity included in the second embedding, and outputting each of a first data format in which the meta information included in the second embedding is recorded and a second data format in which the data information included in the fourth embedding is recorded.

In the method, the data information included in the fourth embedding may be distinguished for each entity group.

In the method, the meta information may include a title of the chart, a name of an axis, and a name of the entity group included in a legend.

In the method, the data information may include numerical information included in the chart.

In the method, the data information may be tokenized into a single token for each piece of the data information and included in the fourth embedding, and in recording the data information included in the fourth embedding in the second data format, the tokenized data information may be extracted from the single tokens and recorded in the second data format.

In the method, the data information may be extracted from the single tokens using a multi-layer perceptron (MLP).

In the method, in extracting the data information from the single tokens, a plurality of pieces of data information may be simultaneously extracted by inputting the single tokens with a predefined repetitive template.

A program according to another aspect of the present invention may be stored on a computer-readable recording medium to implement an AI model for extracting meta information and data information included in a chart through the AI model according to the embodiments of the present invention, in conjunction with a computer.

### [Advantageous Effects]

According to the present invention, since a length of each data format is shortened by separately extracting meta data, the content of data can be simply represented, and accordingly, a possibility of format errors can be reduced.

In addition, according to the present invention, since raw data is independently represented by distinguishing the raw data for each entity group, there is no need to input a "nan" value that is difficult to process for an empty data value, thereby minimizing format errors caused by failure to identify the "nan" value or optimizing token usage.

In addition, according to the present invention, since each number included in the entity groups of a chart is output using a single token (<num>), the separation of tasks between text understanding and data extraction can be facilitated, and the number of tokens representing numbers can be reduced, thereby enabling efficient training and prediction in a model.

In addition, according to the present invention, since a sufficient length of "<num>" tokens is provided in advance, the necessity for autoregressive transfer can be minimized, and furthermore, the inference speed can be significantly improved.

Effects of the present invention are not limited to the above-described effects, and other effects that are not mentioned will be clearly understood by those skilled in the art from the following description.

### [Description of Drawings]

FIG. 1 is a schematic diagram of a system for implementing an artificial intelligence(AI)-based chart de-rendering method according to one embodiment of the present disclosure.
FIG. 2 is a block diagram for explaining a configuration of a device performing the AI-based chart de-rendering method according to one embodiment of the present disclosure.
FIG. 3 is a block diagram for explaining a method of extracting meta information and data information from a chart according to embodiments of the present invention.
FIG. 4 is a conceptual diagram for explaining a method of representing the number "-0412920" in an embedding through SNE according to embodiments of the present invention.
FIG. 5A is a conceptual diagram showing a method of recognizing and representing numbers in an autoregressive method in a conventional language model.
FIG. 5B is a method of recognizing and representing numbers in the autoregressive method through SNE according to embodiments of the present invention.

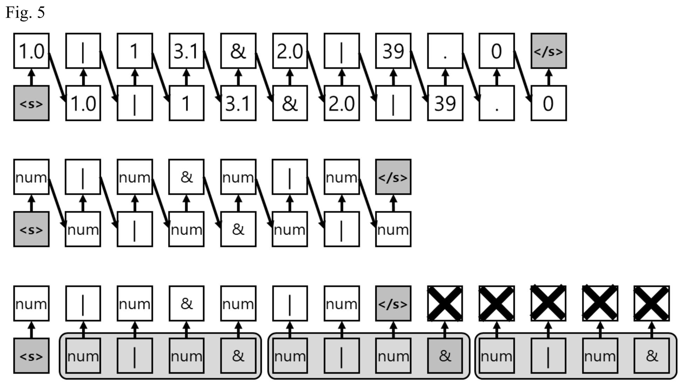

FIG. 5B is a method of recognizing and representing numbers in a non-autoregressive method using a repetitive template through SNE according to embodiments of the present invention.
FIG. 6 is an example of a data format used in a conventional generative model.

### [Modes of the Invention]

The following embodiments are provided as examples so that the spirit of the present invention can be sufficiently conveyed to those skilled in the art to which the present invention pertains. Therefore, the present invention is not limited to the embodiments described below and may be specified in other forms.

The same reference numerals refer to the same components throughout the present invention. The present invention does not describe all elements of the embodiments, and common content in the art to which the present invention pertains or content that overlaps between the embodiments will be is omitted. Terms "unit," "module," "member," and "block" used in the specification may be implemented as software or hardware, and according to the embodiments, a plurality of "units," "modules," "members," and "blocks" may be implemented as one component, or one "unit," "module," "member," and "block" may also include a plurality of components.

Throughout the specification, when a first component is described as being "connected" to a second component, this includes not only a case in which the first component is directly connected to the second component but also a case in which the first component is indirectly connected to the second component, and the indirect connection includes connection through a wireless communication network.

In addition, when a certain portion is described as "including" a certain component, it means further including other components rather than precluding other components unless specifically stated otherwise.

Throughout the present specification, when a first member is described as being positioned "on" a second member, this includes both a case in which the first member is in contact with the second member and a case in which a third member is present between the two members.

Terms such as first and second are used to distinguish one component from another, and the components are not limited by the above-described terms.

A singular expression includes plural expressions unless the context clearly dictates otherwise.

In each operation, identification symbols are used for convenience of explanation, and the identification symbols do not describe the sequence of each operation, and each operation may be performed in a different sequence from the specified sequence unless a specific sequence is clearly described in context.

A chart de-rendering system according to the present invention may include a device, and the device may include all kinds of devices that can perform computational processing to provide results to a user. For example, the chart de-rendering system according to the present invention may include at least one of a computer, a server device, and a portable terminal, or may be implemented in any one form having the same or similar functions thereof. However, the present invention is not limited thereto.

Here, the computer may include, for example, a notebook, a desktop, a laptop, a tablet PC, a slate PC, etc., which are equipped with a web browser.

The server device is a server that processes information in communication with an external device, and may include an application server, a computing server, a database server, a file server, a game server, a mail server, a proxy server, and a web server.

The portable terminal is, for example, a wireless communication device ensuring portability and mobility and may include all kinds of handheld-based wireless communication devices such as a personal communication system (PCS), a global system for mobile communications (GSM), a personal digital cellular (PDC), a personal handyphone system (PHS), a personal digital assistant (PDA), international mobile telecommunication-2000 (IMT-2000), code division multiple access-2000 (CDMA-2000), w-code division multiple access (W-CDMA), a wireless broadband internet (WiBro) terminal, a smart phone, and wearable devices such as a watch, a ring, a bracelet, an anklet, a necklace, glasses, contact lenses, or a head-mounted device (HMD).

Hereinafter, embodiments of the present invention will be described in detail with reference to the accompanying drawings.

The present invention relates to a chart de-rendering system, method, and program for extracting meta information and data information included in a chart, and more particularly, to a chart de-rendering system, method, and program capable of extracting meta information and data information included in a chart using artificial intelligence.

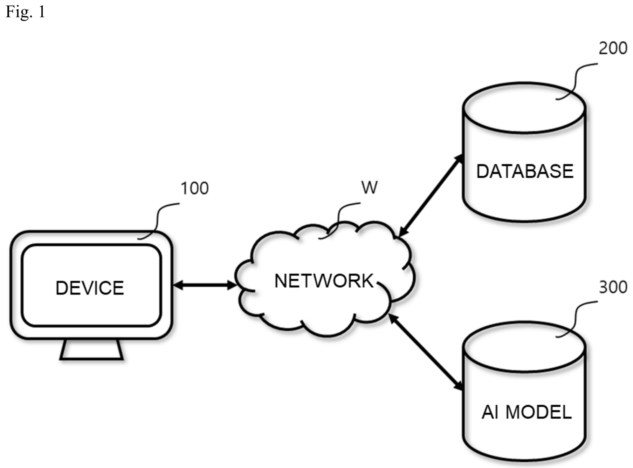

FIG. 1 is a schematic diagram of a system that can implement a method for de-rendering a chart according to one embodiment of the present invention.

As shown in FIG. 1, a system 1000 may include a device 100, a database 200, and an AI model 300.

The device 100, the database 200, and the AI model 300 that are included in the system 1000 may perform communication via a network W. Here, the network W may include a wired network and a wireless network. For example, the network may include various networks such as a local area network (LAN), a metropolitan area network (MAN), and a wide area network (WAN).

In addition, the network W may also include the well-known world wide web (WWW). However, the network W according to embodiments of the present invention is not limited to the above-listed networks and may include, at least in part, a well-known wireless data network, a well-known telephone network, or a well-known wired and wireless television network.

The device 100 may input the chart and output information about the chart based on the AI model 300.

A form of the chart input to the AI model 300 may be a vertical/horizontal bar chart, a line chart, a pie chart, an area chart, a scatter chart, a radar chart, a histogram, and/or a waterfall chart. The form of the chart may be a single form or a combined form of a plurality of forms. However, the chart used in the present invention is not limited thereto, and the chart may include any form of chart. In addition, the chart may include text information in addition to information (e.g., lines, circles, etc.) that visualizes numerical values, etc., and specifically may include annotation information of the chart, a legend or title of the chart, a name of each axis (e.g., X-axis, Y-axis, Z-axis, etc.), numerical values of raw data of points included in the chart (e.g., numerical values of X-axis and Y-axis of points included in the chart), etc.

Information about the chart output from the AI model 300 may be information that represent features of the chart and include meta information, data information, etc. The meta information may include the names of X-axis and Y-axis, a name of an entity group recorded in the legend, etc. The data information may include numerical values of X-axis and/or Y-axis of each entity, etc.

According to the present invention, when outputting information about the chart based on an obtained chart (e.g., an image), the device 100 may separately output meta information and data information included in the information about the chart.

The database 200 may store various training data for training the AI model 300. In addition, the database 200 may store a chart image, the information about the chart, etc., and in various embodiments, may store output data output by the AI model 300. However, the system 1000 may not include the database 200 when the training of the AI model 300 is completed.

FIG. 1 shows a case in which the database 200 is implemented outside the device 100. In this case, the database 200 may be connected to the device 100 in a wired or wireless communication manner. However, this is only one embodiment, and the database 200 may also be implemented as one component of the device 100.

FIG. 1 shows a case in which the AI model 300 is implemented outside the device 100 (e.g., implemented in a cloud-based manner), but is not limited thereto, and may be implemented as one component of the device 100.

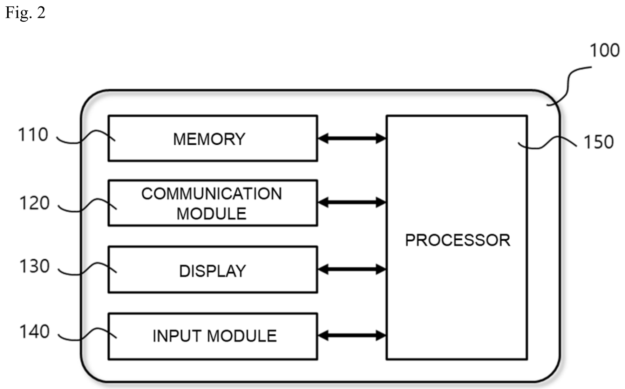

FIG. 2 is a block diagram for explaining a configuration of a device performing a method for extracting meta information and data information of a chart using artificial intelligence using artificial intelligence according to one embodiment of the present invention.

As shown in FIG. 2, the device 100 may include a memory 110, a communication module 120, a display 130, an input module 140, and a processor 150. However, the present invention is not limited thereto, and software and hardware components of the device 100 may be modified/added/omitted according to a required operation within a scope obvious to those skilled in the art. In addition, the device 100 may be replaced with a system, and the device 100 may include a plurality of devices and in this case, each component included in the device 100 may be included in at least one of the plurality of devices.

The memory 110 may store data supporting various functions of the device 100 and a program for the operation of the processor 150, store input/output data, and store a plurality of application programs or applications that are driven on the present device, data, command and the AI model for the operation of the device 100. At least some of the application programs may be downloaded from an external server via wireless communication.

Such memory 110 may include at least one type of storage medium among a flash memory type, a hard disk type, a solid state disk type (SSD type), a silicon disk drive type (SDD type), a multimedia card micro type, a card-type memory (e.g., an SD or XD memory), a random access memory (RAM), a static random access memory (SRAM), a read-only memory (ROM), an electrically erasable programmable ROM (EEPROM), a programmable ROM (PROM), a magnetic memory, a magnetic disk, and an optical disk.

In addition, the memory 110 may be separate from the present device, and may include a database that connected in a wired or wireless communication manner. The database 200 shown in FIG. 1 may be implemented as one component of the memory 110.

The communication module 120 may include one or more components that enable communication with an external device, and may include at least one of, for example, a broadcasting reception module, a wired communication module, a wireless communication module, a short-range communication module, or a position information module.

The wired communication module may include not only various wired communication modules such as a local area network (LAN) module, a wide area network (WAN) module, and a value added network (VAN) module, but also various cable communication modules such as a universal serial bus (USB), a high definition multimedia interface (HDMI), a digital visual interface (DVI), a recommended standard 232 (RS-232), power line communication, and plain old telephone service (POTS).

In addition to the WiFi module and the wireless broadband (WiBro) module, the wireless communication module may include a wireless communication module for supporting various wireless communication methods such as global system for mobile communication (GSM), code division multiple access (CDMA), wideband CDMA (WCDMA), universal mobile telecommunications system (UMTS), time division multiple access (TDMA), long term evolution (LTE), 4G, 5G, or 6G.

The display 130 displays (outputs) information or data that are processed in the device 100, data that are input or output through the AI model 300, etc. In addition, the display 130 may display execution screen information of an application program (e.g., an application) driven on the device 100, or user interface (UI) or graphic user interface (GUI) information according to such execution screen information.

The input module 140 is for receiving information from a user, and when receiving information through a user input unit, the processor 150 may control the operation of the device 100 to correspond to the input information.

Such input module 140 may include a hardware physical key (e.g., a button located on at least one of a front surface, a back surface, and a side surface of the present device, a dome switch, a jog wheel, a jog switch, etc.) and a software touch key. As an example, the touch key may be formed as a virtual key, a soft key, or a visual key that is displayed on a touchscreen type of the display 130 through software processing or may be formed as the touch key disposed a portion other than the touchscreen. Meanwhile, the virtual key or visual key may have various forms and may be displayed on the touchscreen, and may be formed as, for example, a graphic, text, an icon, a video, or a combination thereof.

The processor 150 may be implemented with a memory that stores data for an algorithm for controlling the operations (including learning or execution of the AI model) of the components in the device 100 or a program that reproduces the algorithm, and at least one processor (not shown) that performs the above-described operation using the data stored in the memory. In this case, the memory and the processor may each be implemented as separate chips or may be implemented as a single chip.

In one embodiment, the system 1000 or the device 100 according to the present invention may include at least one processor, and when including a plurality of processors, the plurality of processors may be included in different devices 100.

In addition, the processor 150 may control the operations of the components by combining any one or a plurality of the above-described components in order to implement various embodiments according to the present disclosure, which will be described below, on the device 100.

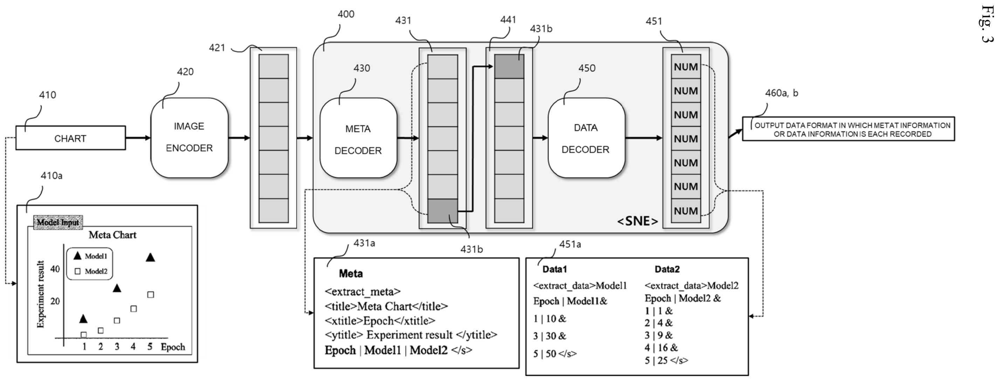

FIG. 3 is a block diagram for explaining a method of extracting the meta information and the data information from a chart according to embodiments of the present invention.

Referring to FIG. 3, a chart 410 including a title of a chart, axis names, legend information, numerical values, etc. is input to an image encoder 420. As described above, a form of the chart 410 may be a vertical/horizontal bar chart, a line chart, a pie chart, an area chart, a scatter chart, a radar chart, a histogram, and/or a waterfall chart., but is not limited thereto. In addition, the form of the chart may be a single form or a combined form of a plurality of forms. For example, a chart 410a included in FIG. 3 may be used as the chart 410.

The image encoder 420 is an encoder following a generally used encoder architecture, which may be implemented as an AI model, specifically may be ViT or ResNet, but is not limited thereto. The image encoder 420 serves to convert the input chart 410a into a first embedding 421 that may be processed by the AI model 300.

Next, the first embedding 421 output from the image encoder 420 is input to an AI model 400 including a meta decoder 430 for performing a meta decoding task and a data decoder 450 for performing data decoding.

First, the first embedding 421 is decoded through the meta decoder 430, which may operate in an autoregressive method. The meta decoder 430 may recognize the meta information from the embedding 421, such as names of X-axis and Y-axis, names of entity groups recorded in a legend, etc., but the recognized meta information is not limited thereto. The meta decoder 430 outputs a second embedding 431 including the recognized meta information. For example, in the case of using the chart 410a, the second embedding 431 may include a chart title (<title>Meta Chart</title>), an X-axis name (<xtitle>Epoch</xtitle>), a Y-axis name (<ytitle>Experiment result</ytitle>), and a list of entity groups recorded in the legend (Epoch|Model1|Model2), as in an embedding 431a.

The present invention, by separately extracting the meta information from the data information described below, has effects in which a length of each data format is shortened, allowing the content of data to be simply represented, and thereby, reducing the possibility of format errors.

Next, among the information included in the second embedding 431, information 431b about an entity serves as a prompt that guides the data decoder 450 decoding the data in the AI model 400 to output an embedding including raw data. When the information 431b about the entity is input to the data encoder as a third embedding 441, a fourth embedding 451 including raw data for each entity is output. In this case, the fourth embedding 451 generates raw data in a format of [x1|y1 &; x2|y2 &; ... xnlyn &; </s>], and distinguishes and independently represents raw data for each entity group. For example, when the chart 410a shown in FIG. 3 is used, as shown in an embedding 451a, raw data for Model 1 ([1]10 &; 3|30 &; 5|50 & </s>]) is represented, and raw data for Model 2 ([1|1 &; 2|4 &; 3|9 & 4|16 &; 5|25 &</s>]) is independently represented.

In the present invention, the data format output when the chart 410a is input differs from that of the conventional generative model as follows. In order to indicate that, when a value of Epoch in the chart 410a is 2, Model 2 has a value of "4" while Model 1 has no value, the conventional generative model inputs the value of "4" for Model 2 and inputs a "nan" value for Model 1 to indicate an empty value (see FIG. 6). In contrast, the present invention represents the data in a manner where, since the output embedding 451a independently represents the raw data for each entity group, the data related to Model 1 simply does not define the case in which the value of Epoch is 2. That is, the present invention may not output the "nan" value, which frequently causes errors in the system processing.

The present invention, by using a data format in which data is independently represents for each entity group, has effects in which the need to input the "nan" value that is difficult to process for an empty data value is eliminated, thereby minimizing format errors caused by failure to identify the "nan" value, and optimizing token usage by eliminating the need to allocate a token for the "nan" value.

Here, the present invention may use a singularized number embedding (SNE) method as a method for representing numbers in the fourth embedding 451 (which contrasts with the conventional generative model that treats numbers as text). The SNE refers to a method in which each number included in the entity is tokenized into a single token (<num>) in the data decoder 450 for decoding data in the AI model 400, and the number is output to the fourth embedding 451 using the token.

A multi-layer perceptron (MLP) may be used as a method for extracting numbers using the tokenized single token (<num>). Here, the MLP is composed of an input layer, one or more hidden layers, and an output layer, and each layer includes weights and an activation function. The weights used in the MLP of the present invention may be pre-optimized through a training algorithm to predict nonlinear patterns and relationships.

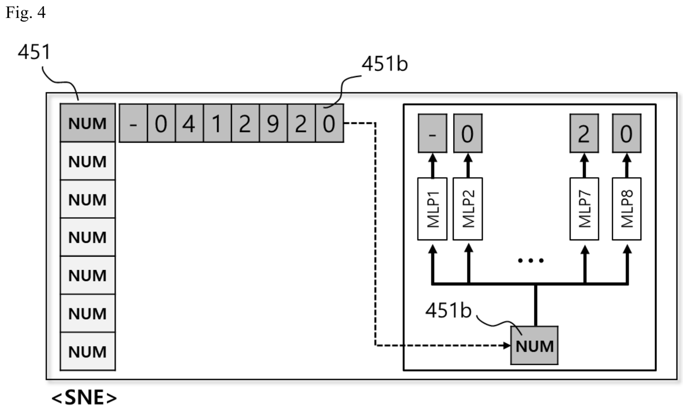

For example, as shown in FIG. 4, in the case of representing the number "-0412920" in an embedding through the SNE, each number included in the entity is tokenized into a single token (<num>) 451b through the data decoder 450 decoding data in the AI model 400, and the token 451b is input to the MLP to represent the number on the fourth embedding 451.

The present invention, through this, can expect additional performance improvement by facilitating the separation of tasks between text understanding and data extraction, can enable efficient training and prediction in the model by reducing the number of tokens representing numbers, and can greatly improve inference speed by repeatedly using the <num> token.

Meanwhile, the present invention can further improve the inference speed by outputting numbers through inputting tokens used in SNE with a predefined repetitive template.

Specifically, referring to FIG. 5A, a conventional language model treats numbers as text and uses an autoregressive method in which each token is sequentially predicted. The method infers numbers by sequentially supplying a token at time step t to the model and generating outputs until an end of sentence (EOS) token (</s>) is reached. As described above, this method causes problems of token waste and reduced inference speed.

This problem may be partially improved by representing numbers in an autoregressive manner using a single token <num> through the SNE, as shown in FIG. 5B.

In addition, as shown in FIG. 5C, performance may be further improved by additionally providing a non-autoregressive method that simultaneously infers multiple numbers by inputting a plurality of <num> tokens at once with a predefined repetitive template when inferring numbers using the token <num> (in this case, while inputting the tokens <num> through the repetitive template, outputs after the first EOS token (</s>) are discarded).

The present invention, through this, supplies a sufficient length of "<num>" tokens in advance, thereby minimizing the necessity for autoregressive transfer, and furthermore, significantly improving the inference speed.

As such, through the processing using the AI model, a data format 460a in which the meta information is recorded and a data format 460b in which the data information included in the fourth embedding is recorded may be each ultimately obtained.

Meanwhile, the method of extracting the meta information and the data information from the chart according to embodiments of the present invention may be implemented by the system described with reference to FIG. 3.

AI models according to embodiments of the present invention may be controlled, executed, trained, driven, etc. by the processor, and accordingly, at least one of the tasks of executing, training, and driving the AI models may be performed by at least one processor. In addition, the AI models may be stored in the memory, and the feature data according to the present invention may also be stored in memory.

Meanwhile, disclosed embodiments may be implemented in the form of a recording medium in which computer-executable commands are stored. The commands may be stored in the form of program code, and when executed by the processor, program modules may be generated to perform operations of the disclosed embodiments. The recording medium may be implemented as a computer-readable recording medium.

The computer-readable recording medium includes all types of recording media in which computer-decodable commands are stored. For example, there may be a read only memory(ROM), a random access memory(RAM), a magnetic tape, a magnetic disk, a flash memory, an optical data storage device, and the like.

As described above, the disclosed embodiments have been described with reference to the accompanying drawings. Those skilled in the art to which the present disclosure pertains will understand that the present disclosure may be implemented in different forms from the disclosed embodiments without departing from the technical spirit or essential features of the present disclosure. The disclosed embodiments are illustrative and should not be construed as being limited.

## Claims

1. A system for implementing an AI model for extracting meta information and data information included in a chart, the system comprising:
at least one processor; and
at least one memory storing a command or information that cause the at least one processor to perform an operation,
wherein the operation performed by the command includes:
converting the chart into a first embedding processable by the AI model, by inputting the chart to an image encoder;
outputting a second embedding including the meta information from the first embedding by inputting the first embedding to the AI model, and outputting a fourth embedding including the data information from a third embedding including information about an entity included in the second embedding; and
outputting each of a first data format in which the meta information included in the second embedding is recorded and a second data format in which the data information included in the fourth embedding is recorded.

2. The system of claim 1, wherein the data information included in the fourth embedding is distinguished for each entity group.

3. The system of claim 1, wherein the meta information includes a title of the chart, a name of an axis, and a name of the entity group included in a legend.

4. The system of claim 1, wherein the data information includes numerical information included in the chart.

5. The system of claim 1, wherein the data information is tokenized into a single token for each piece of the data information and included in the fourth embedding, and
in recording the data information included in the fourth embedding in the second data format, the tokenized data information is extracted from the single tokens and recorded in the second data format.

6. The system of claim 4, wherein the data information is extracted from the single tokens using a multi-layer perceptron (MLP).

7. The system of claim 5 or 6, wherein
in extracting the data information from the single tokens, a plurality of pieces of data information are simultaneously extracted by inputting the single tokens with a predefined repetitive template.

8. A method for extracting meta information and data information included in a chart, the method comprising:
converting the chart into a first embedding processable by an AI model, by inputting the chart to an image encoder;
outputting a second embedding including the meta information from the first embedding by inputting the first embedding to the AI model;
outputting a fourth embedding including the data information from a third embedding including information about an entity included in the second embedding; and
outputting each of a first data format in which the meta information included in the second embedding is recorded and a second data format in which the data information included in the fourth embedding is recorded.

9. The method of claim 8, wherein the data information included in the fourth embedding is distinguished for each entity group.

10. The method of claim 8, wherein the meta information includes a title of the chart, a name of an axis, and a name of the entity group included in a legend.

11. The method of claim 8, wherein the data information includes numerical information included in the chart.

12. The method of claim 8, wherein the data information is tokenized into a single token for each piece of the data information and included in the fourth embedding, and
in recording the data information included in the fourth embedding in the second data format, the tokenized data information is extracted from the single tokens and recorded in the second data format.

13. The method of claim 12, wherein the data information is extracted from the single tokens using a multi-layer perceptron (MLP).

14. The system of claim 12 or 13, wherein in extracting the data information from the single tokens, a plurality of pieces of data information are simultaneously extracted by inputting the single tokens with a predefined repetitive template.

15. A program stored in a computer-readable recording medium to execute the method of any one of claims 8 to 14 in conjunction with a computer.
